(19) Europäisches Patentamt
European Patent Office
Office européen des brevets

(11) **EP 2 302 570 A1**

(12) **EUROPEAN PATENT APPLICATION**

(43) Date of publication:
**30.03.2011 Bulletin 2011/13**

(51) Int Cl.:
***G06Q 10/00*** *(2006.01)*

(21) Application number: **09011811.8**

(22) Date of filing: **16.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **SIEMENS AKTIENGESELLSCHAFT 80333 München (DE)**

(72) Inventors:
• **Davidich, Maria, Dr. 82061 Neuried (DE)**
• **Richter, Mathias, Dr. 80637 München (DE)**

(54) **Method and apparatus for automatically reconfiguring at least one motion parameter**

(57) The present invention is directed towards a method and an apparatus 1 for automatic reconfiguration of at least one motion parameter MP. The present invention allows to calibrate model instances (MI1, MI1') and to determine a measure of how reliable that calibration is. The introduced algorithms are flexible and resource efficient. The present invention finds application in pedestrian stream simulation, as well as relations of motion behaviour of different entities.

FIG 6

EP 2 302 570 A1

## Description

The present invention is directed to a method and an apparatus for pedestrian stream simulation and especially to automatically reconfiguring at least one motion parameter. The present invention is furthermore directed to a computer program being adapted to perform said method and a data carrier which stores said computer program.

Simulators of pedestrian streams imitate the behaviour of crowds in different infrastructures and places, such as buildings, stadiums, etc., for instance for statistical purposes, for administrative purposes and furthermore for safety reasons of pedestrians and traffic participants. One goal of pedestrian stream simulation is to gain improved control over crowd behaviour and especially to predict crowd behaviour. Off line simulations allow re-enacting several scenarios and critical situations and hence finding adequate measures for avoiding dangers and thus for improving security.

A variety of potentially dangerous scenarios is known. These scenarios range from environmental disasters to cultural events. In case of emergency it is required to evacuate people as fast as possible. In order to deliver reliable results crowd simulations must correctly reproduce crowd behaviour. Hence, a crowd simulation model must capture important parameters of crowd behaviour. Commonly known methods therefore apply a gradually increasing of details of modelling and comparing simulation results and empirical data. The underlying rules of interactions can be assumed to be general to a certain degree depending on a large number of parameters. Rather general rules of interaction cannot be expected to capture every situation and need to be adapted to the scenario of interest. Hence, the model of pedestrian streams must be calibrated. Calibration may refer to the adaption of the model of pedestrian streams through specific information of the real world. Commonly known dependencies are for example the basic environmental conditions as structural constraints imposed by the architecture of a surrounding building, as well as socio-cultural aspects.

In commonly known methods fundamental diagrams are used for predicting behaviour. One may for instance supply an empirically derived fundamental diagram of pedestrian dynamics. Such a diagram of pedestrian dynamics may for instance indicate that there is a relation between the density of pedestrians and walking speed. Also a scenario dependency can be indicated, such as that the walking speed in one direction depends on the density of pedestrians moving in the opposite direction.

Commonly known methods do not introduce a fundamental diagram which allows predictions in all possible scenarios, cultures and locations. It is known to model pedestrian behaviour as a function of pedestrian behaviour parameters. Currently applied methods do not provide a means for identifying how to calibrate motion parameters, such as pedestrian motion parameters, in a fashion allowing to measure whether the calibration is reliable and hence delivers results which model the real world aspects appropriately. As adjusting model parameters is labour intensive and error-prone a method is required which allows to evaluate calibrations automatically.

It is therefore an object of the present invention to provide a method which allows to adjust motion parameters as a function of a fitness metric, which delivers reliable results and operates efficiently keeping simulation time low.

This object is solved by a method providing the features of patent claim 1.

Therefore, a method for automatically reconfiguring at least one motion parameter as a function of a fitness metric, said fitness metric indicating a relation between a first model influence of a motion simulation model and a provided second model instance, wherein the first model instance of said motion simulation model is simulated as a function of the at least one motion parameter is provided.

A motion parameter is for instance a parameter describing characteristics of a motion of an entity. Hence, a motion parameter is not restricted to a parameter describing a pedestrian behaviour but may furthermore be directed to movements of any entity, such as a car, a plane, a robot, a signal transmitting device and/or a traffic participant. A signal transmitting device may for instance be a mobile phone which is carried through different cells and/or radio cells. Furthermore, motion of vehicles having a GPS-transmitter attached can be described by a motion parameter.

A motion parameter may describe observed entity motion behaviour and can therefore be obtained from real world observation. Furthermore one can determine motion parameters manually for configuration of a motion simulation model. Hence, said motion parameter is obtained artificially. Said motion parameter may be used for affecting the behaviour of the motion simulation model in terms of configuration parameters for rules being used by the motion simulation model. A set of said artificially determined motion parameter can be summarized in deceleration classes. Deceleration classes can be used for indicating how much entities decelerate in case a certain density occurs. Thus, deceleration classes configure a rule being part of the motion simulation model, the rule modelling a deceleration behaviour.

For obtaining entity motion predictions a motion simulation model can be applied. A motion simulation model generally describes entity motion behaviour in an abstract way, which can be instantiated according to specific real world scenarios. A motion simulation model may indicate certain parameters without assigning values to said parameters. The motion simulation model can furthermore indicate that certain parameters may be required for predicting entity motion behaviour. It is of advantage, to create a set of rules and/or an ontology to define said motion simulation model. A further possibility to implement said motion simulation model is to apply a software or a computer program product defining configuration data of a machine providing said motion simulation model. The person skilled in the art furthermore appreciates other ways to provide the motion simulation model.

It is possible to create a first model instance and a second model instance by instantiation of said motion simulation model. It is further of advantage, that the first model instance is an instance of said motion simulation model, while the second model instance is an instance of a further model. A first model instance of said motion simulation model may assign motion parameters such as velocity, density or flow certain values. The first model instance may therefore also be referred to a simulated model. The second instance model may assign concrete values to motion parameters by an observation of real world aspects. It may be the case that the first model instance provides simulated values of motion parameters and said second model instance provides observed values of motion parameters. The first model instance as well as the second model instance can be represented by a curve or by a further representation, such as an XML-file. It is possible to store the provided second model instance in a database, the database providing information of empirically determined model instances. Therefore, the provided second model instance may be selected from a variety of stored model instances. It may further be the case that the provided second model instance is created as a function of theoretically derived information and may therefore also be referred to as theoretical fundamental diagram. The notion of diagram refers to any representation of the second model instance and is therefore not restricted to a diagram.

In reality there is no single fundamental diagram being valid for all situations. The relation for instance between specific flow and density of pedestrians is influenced by many more factors like the surface of the area that pedestrians traverse. Also cultural and social factors influence pedestrians' behaviour. Therefore, in different settings, different fundamental diagrams are valid. As a function of simplicity and efficient simulation time the number of such motion parameters may varied. Therefore, reconfiguring motion parameters has to be accomplished for each application scenario and setting. The method according to an aspect of the present invention allows an automatic calibration procedure to adjust motion parameters in a predefined way, such that the characteristics of simulated pedestrian streams, for instance according to the first model instance, match those of actually observed streams, for instance of the provided second model instance.

Reconfiguring at least one motion parameter may be accomplished iteratively. It may therefore be of advantage to compare the first model instance of the motion simulation model with the provided second model instance according to a fitness metric. A fitness metric provides a measure for making statements about how the first model instance matches the second model instance. Hence, the fitness metric may define rules according to which one can compare the first model instance with the provided second model instance and furthermore define parameters which allow for an evaluation of a relation between the first model instance and the second model instance. The fitness metric may for instance define that certain values of the first model instance are compared with certain values of the second model instance and may define that the fitness value is the inverse difference between said values. This may comprise calculating an automatic mean of difference values of the first model instance and the second model instance. The fitness metric can furthermore consider a parameter space in which actual values of motion parameters are arranged. One possible result applying a fitness metric is a certain fitness value indicating that the first model instance and the provided second model instance are equal to a certain percentage or that equality of the first model instance and the second model instance is given at a value being greater one. As it is of advantage that the first model instance matches the second model instance the second model instance may also be referred to as target model instance.

The at least one motion parameter may serve as input for a simulation software applying the motion simulation model. The one motion parameter can be arranged as a vector or a matrix according to which the first model instance is created. After the first model instance is evaluated as a function of the fitness metric and the second model instance, the motion parameters can be adapted for obtaining an improved fitness value. Hence, in a first iteration the at least one motion parameter is reconfigured, which results in an improved first model instance as regards its fitness compared to the second model instance. It can be of advantage to perform several iterations to reach a prescribed fitness value, which is identified in the fitness metric. It is therefore possible, to obtain a calibrated first model instance at a presumable effort. It is possible to define that the fitness metric is very strict, indicating that a very specific fitness value has to be reached or that a fitness value of a certain range has to be reached. Therefore, a measurement for evaluating the calibration of the at least one motion parameter and thus the calibration of the first model instance is introduced. Furthermore, one can determine the effort for calibrating that at least one motion parameter and therefore the first model instance by the prescribed fitness value.

In an embodiment of the method according to an aspect of the present invention at least one of the group of model instances describes a motion behaviour of at least one entity, the group comprising: the first model instance and the provided second model instance.

This provides the advantage that a motion behaviour of any type and number of entity can be considered by the introduced method.

In yet a further embodiment of an aspect of the present invention the motion behaviour affects at least one entity motion stream.

This has the advantage that several entities performing an entity motion stream can be considered including as a parameter such as direction of the stream.

In yet a further embodiment of the method according to an aspect of the present invention the provided second model instance is calculated as a function of observed motion parameters.

This provides the advantage that the second model instance can be provided according to empirically determined motion parameters, such as flow and density.

In yet a further embodiment of the method according to an aspect of the present invention the fitness metric describes a difference between the first model instance and the provided second model instance.

This has the advantage that the fitness metric is suitable for measuring differences between the first model instance and the provided second model instance.

In yet a further embodiment of the method according to an aspect of the present invention a fitness value is calculated as a function of the first model instance, the provided second model instance and the fitness metric.

This provides the advantage that a concrete number, which may be real valued or indicating a percentage can be obtained for evaluating calibration results.

In yet a further embodiment of the method according to an aspect of the present invention the at least one motion parameters is automatically reconfigured, such that the calculated fitness value equals or exceeds a predefined fitness value.

This has the advantage that a predefined fitness value, such as a threshold, can be applied for determining a minimum quality requirement as regards the first model instance.

In yet a further embodiment of the method according to an aspect of the present invention the fitness metric comprises at least one of the group of norms, the group comprising: an L2 norm, an approximation of the L2 norm, a norm assigning different weight coefficients to at least a part of a model instance and a norm weighting a plurality of differences between the first model instance and the provided second model instance.

This provides the advantage that a number of well-known group of norms can be applied by the introduced method.

In yet a further embodiment of the method according to an aspect of the present invention the provided second model instance comprises at least one density information and at least one flow information of at least one entity motion stream.

This has the advantage that typical entity motion parameters can be applied by the introduced method.

In yet a further embodiment of the method according to an aspect of the present invention reconfiguring the at least one motion parameter comprises discrete optimization.

This provides the advantage that reconfiguration can be performed according to a well-known procedure.

In yet a further embodiment of the method according to an aspect of the present invention the discrete optimization comprises performing at least one of the group of optimization procedures, the group comprising: an evolution strategy, an extremal optimization, a memetic algorithm, a reactive search optimization, a simulated annealing and a tabu search.

This has the advantage that a variety of optimization procedures can be applied from which one can be selected.

In yet a further embodiment of the method according to an aspect of the present invention the provided second model instance is selected from a plurality of model instances.

This provides the advantage that the second model instance can be chosen according to specific real world scenarios, which are represented by model instances being stored, for instance in a database.

In yet a further embodiment of the method according to an aspect of the present invention the at least one motion parameter indicates a pedestrians motion and the motion simulation model indicates a pedestrian stream.

This has the advantage that the introduced method can be applied especially for pedestrian simulation issues.

The object is also solved by an apparatus for automatic reconfiguration of at least one motion parameter. Therefore, an apparatus is provided for automatic reconfiguration of at least one motion parameter being stored in a storage unit as a function of a fitness metric being provided by a fitness metric provision unit, the fitness metric indicating a relation between a first model instance of a motion simulation model, the first model instance being provided by a model simulation unit and a provided second model instance, the provided second model instance being provided by a model provision unit, wherein the first model instance of said motion simulation model is simulated by the model simulation unit as a function of the at least one motion parameter.

The present invention furthermore provides a computer program being adapted to perform the aforementioned method on a computer as well as a data carrier which stores the computer program.

Hence a method and an apparatus are introduced which allow a reconfiguration of motion parameters, especially for pedestrian simulation and furthermore allow to measure how reliable said calibration is.

In the following possible embodiments of the method and the apparatus for automatically reconfiguring at least one motion parameter are described with reference to the enclosed figures.

Fig. 1     shows a cellular automaton for modelling pedestrian movements as being applied in an embodiment of the method according to an aspect of the present invention;

Fig. 2     shows the creation of a model instance as being applied in an embodiment of the method according to an aspect of the present invention;

Fig. 3     shows a flow diagram of a method for automatically reconfiguring at least one motion parameter according to an aspect of the present invention;

Fig. 4     shows a detailed flow diagram of a method for automatically reconfiguring at least one motion parameter according to an aspect of the present invention;

Fig. 5     shows a block diagram of an apparatus for automatically reconfiguration of at least one motion parameter according to an aspect of the present invention;

Fig. 6     shows a detailed block diagram of an apparatus for automatically reconfiguration of at least one motion parameter according to an aspect of the present invention;

Fig. 7     shows a diagram representing model instance representations as being used by the method for automatically reconfiguring at least one motion parameter according to an aspect of the present invention;

Fig. 8     shows a diagram illustrating results of an optimization of motion parameters as being applied by the method for automatically reconfiguring at least one motion parameter according to an aspect of the present invention; and

Fig. 9     shows a diagram illustrating results of an optimization of motion parameters as being applied by the method for automatically reconfiguring at least one motion parameter according to an aspect of the present invention.

Same reference signs are denoted to the same aspects if not indicated otherwise.

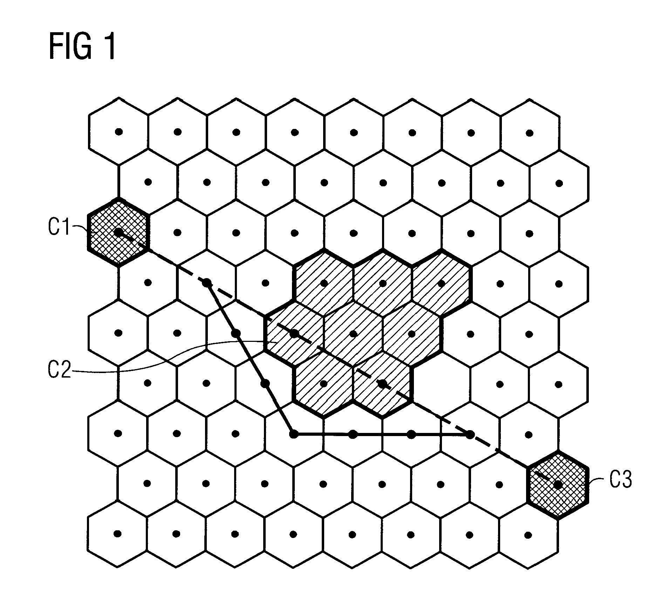

Figure 1 shows a cellular automaton based on a grid with hexagonal cells as being used by the method according to an aspect of the present invention. According to an embodiment of the present invention pedestrian or entity motion can be simulated using a discretization of the simulation area by means of cells, which are hexagonal in the present embodiment. Said cells may in other embodiments be triangular or rectangular, among others. At every time step of the simulation procedure of an entity motion a cell has a state being defined by the number of pedestrians or entities being located on this cell. Pedestrians or entities move from one cell to another thus changing the state of each of the cells.

In the present embodiment an entity is located at cell C1 and desires to move forward to cell C3. The entity being located in cell C1 may proceed directly to cell C3, which is indicated in the present figure 1 by a dashed line. As the entity being located in C1 encounters an obstacle, for instance cell C2, it may not be possible to move directly from the location C1 to the cell C3. In this embodiment it may be required to move around the obstacle, for instance cell C2, which is indicated by a line in the present figure 1. The cell model as demonstrated in figure 1 may be a part of a motion simulation model. Different velocities of entities can be implemented by allowing the entity to proceed over several cells per simulation step. Hence, in the present embodiment velocity can also be referred to as cell speed indicated by the number of cells covered per simulation step.

In the present embodiment the entity moving from cell C1 to a cell C3 is a pedestrian. Cell C1 represents an elevator transporting pedestrians from a subway station to the surface. Cell C1 therefore acts as a source of pedestrians. Pedestrians may proceed across a public place by moving around a shop being represented by cell C2 and proceed to an exit, being represented by cell C3. Therefore, cell C3 acts as a pedestrian sink.

The basic cell model, as being introduced by the present figure 1, leaves degrees of freedom to be chosen, such as the individual speeds of pedestrians. Individuals may move at a specific velocity, which can be a sample of a Gaussian random distribution, parameterized by mean and standard deviation that depend on circumstances like gender, age, day time, place, among others. In crowds, pedestrians speed decreases because of obstructions imposed by other pedestrians. Deceleration of pedestrians may also depend on the density of pedestrians. This aspect can be modelled by deceleration classes and slow down factors for velocities depending on the occupancy of neighbouring cells by other pedestrians. It may therefore be the case, that in cell C1 several pedestrians are located. It may further be possible, to define a threshold of pedestrians per cell, which indicates, that the specific cell holds the state of being occupied and therefore representing an obstacle for further pedestrians.

The cell model as being described in the present figure 1 may be a part of the motion simulation model, while the modelling of pedestrian or entity motion behaviour is by no means restricted to the cell model. The person skilled in the art therefore appreciates further implementations of a motion simulation model, such as an ontology, a set of rules, a formal model and/or a semi-formal model.

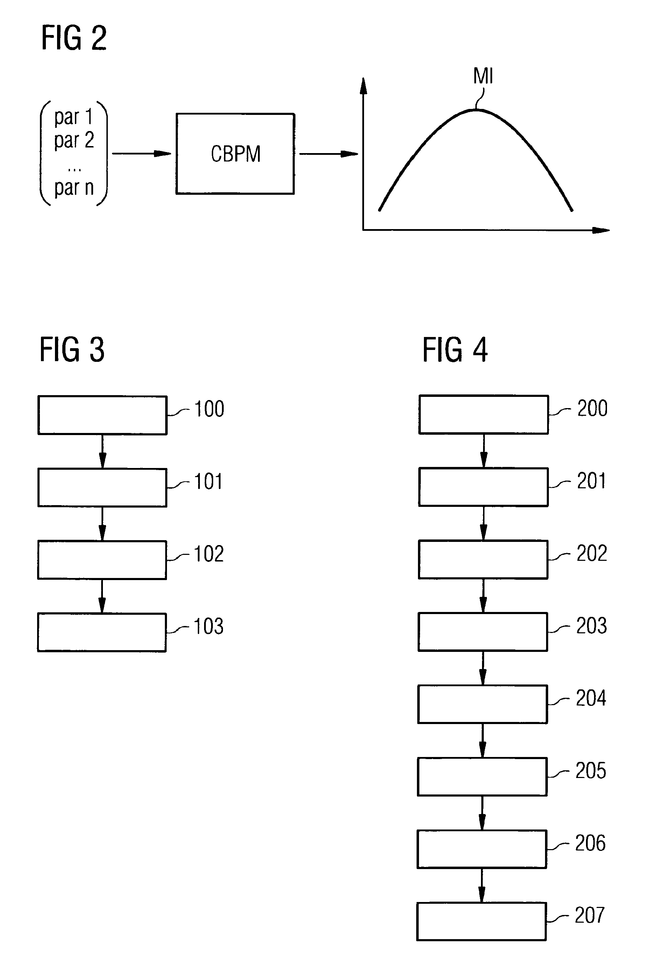

Figure 2 shows a schematic illustration of the creation of a model instance MI as being applied in an embodiment of the method according to an aspect of the present invention. Therefore, motion parameters par1, par2, ... , parn are provided, for instance in a vector representation. Each motion parameter par1, par2, ... , parn has one value assigned. The at least one motion parameter may be referred to as a motion parameter vector. The motion parameter vector serves in the present embodiment as an input for a crowd behaviour prediction machine CBPM, which can be implemented by a computer program product. In the present embodiment one motion parameter par1 is formed by a density parameter. The density parameter describes a number of entities being located on one square meter. A further motion parameters par2 may for instance represent a flow of entities. The resulting model instance MI may for instance be represented in a diagram, which indicates the density on the x-axis and the flow on the y-axis. A model instance may generally be represented in an n-dimensional space, wherein n refers to the number of motion parameters by which the model instance is formed. The person skilled in the art may furthermore appreciate other representations of a model instance.

It can be necessary that further steps as previously mentioned required for creation of a model instance are performed. Depending on the application scenario it can be of advantage to create the first model instance and the second model instance as a function of a first motion simulation model and a further model, which is instantiated for obtaining the second model instance.

In a further embodiment of the creation of a model instance MI as being applied in an embodiment of the method according to an aspect of the present invention the motion parameters par1, par2, ... , parn are calculated by the crowd behaviour prediction machine CBPM. The motion parameters par1, par2, ... , parn can be calculated as a function of further motion parameters, which for instance describe a surface. Said surface may affect the motion behaviour of the entities. A relation of calculated motion parameters par1, par2, ... , parn may be represented by the model instance MI as being calculated by the crowd behaviour prediction machine CBPM. The person skilled in the art appreciates further representations of the model instance MI, other than a curve. The crowd behaviour prediction machine CBPM can be designed to calculate different representations of the model instance, such as any kind of diagram or any kind of output format. It may be of advantage to determine the input parameters of the crowd behaviour prediction machine CBPM artificially, for example by simulation runs, deriving the input parameters theoretically and/or by further calibration of initial input parameters.

Figure 3 shows a block diagram of an embodiment of a method for automatically reconfiguring at least one motion parameter as a function of a fitness metric, said fitness metric indicating a relation between a first model instance of a motion simulation model and a provided second model instance, wherein the first model instance of said motion simulation model is simulated as a function of the at least one motion parameter.

In the present embodiment the method for automatically reconfiguring at least one motion parameter comprises the steps of simulating a first model instance 100 providing a second model instance 101, providing a fitness metric 102 and reconfiguring 103 at least one motion parameter as a function of the fitness metric as being provided in step 102.

The aforementioned steps may be performed iteratively and/or in a different order.

Figure 4 shows a detailed flow diagram of a method for automatically reconfiguring at least one motion parameter according to an aspect of the present invention.

In a first step 200 at least one motion parameter is provided, the motion parameter describes an entity motion behaviour. An entity motion behaviour may for instance be a relation between a density parameter and a velocity parameter. Providing the motion parameter in step 200 may for instance comprise further sub-steps such as receiving motion parameters from a database and/or a storage unit. It can be of advantage, to obtain motion parameters by a observing them and/or empirically determine them. Motion parameters may for instance be determined by a pedestrian tracking device and/or by analysis of video material obtained from a camera.

In a further sub-step 201 a motion simulation model is provided. Providing a motion simulation model may comprise to define certain rules according to which entities or pedestrians behave. Therefore, the motion simulation model as being provided in step 201 may define an abstract set of rules and parameters, which are not yet assigned a value. The motion simulation model is hence a generic model describing motion behaviour of any entity being observable. Depending on the type of entity, it can be of advantage to apply the cell model as depicted in figure 1. It is also possible to combine the cell model as being depicted in figure 1 with further rules. A rule may for instance define how much an entity decelerates in case of a certain density. A rule may furthermore define a specific velocity, for instance measured in kilometres per hour, in case of an occurring density of two people per square meter. As pedestrians may decelerate at a specific density said rules may also be referred to as deceleration classes. Generally, a rule may define that if the density increases the velocity decreases.

In a further sub-step 202 the motion simulation model as being provided in step 201 is instantiated. Therefore, specific values are applied towards the motion simulation model, which results in a first model instance. For instantiating the motion simulation model the provided motion parameters of step 200 may be applied.

In a further subsequent step 203 a second model instance may be selected from a database containing several model instances. It may be possible, that model instances or several scenarios are stored in said database. One scenario may for instance be afternoon in a specific country. Hence, one model instance as being stored at that database may for instance describe motion parameters of a certain place in Germany at 3:00 O' clock in the afternoon. After step 203 is performed a first model instance as well as a second model instance, which needs not necessarily be an instance of the same model, are available for further quality measurements. Quality measurements may for instance comprise indicators which indicate, how closely related the first model instance and the second model instance are.

Therefore, in a subsequent step 204 a fitness metric is selected. A fitness metric defines a certain relation between the first model instance and the second model instance. The fitness metric can be applied to at least parts of the first model instance and parts of the second model instance. The fitness metric may for instance define, that a fitness value is calculated by an inverse difference between the first model instance and the second model instance. It may also be of advantage in other application scenarios, that different fitness metrics are applied. Therefore, in step 204 at least one fitness metric is selected, from a plurality of predefined fitness metrics.

In a further sub-step 205 a fitness value is calculated as a function of the first model instance and the second model instance. The fitness value is calculated by applying the selected fitness metric on the first model instance and the second model instance. The fitness value may for instance define a number and/or a percentage, to which the first model instance and the second model instance are related.

It may be the case that a certain fitness value has to be reached for assuring a certain quality of the first model instance. Therefore, one can provide in a sub-step 206 a reference fitness value which has to be reached by reconfiguring the motion parameters. In case, the predefined fitness value is reached the method for automatically reconfiguring at least one motion parameter may terminate in step 206. In case the provided reference fitness value is not reached one may proceed to a further sub-step 207 in which the motion parameters, as being provided in step 200, are reconfigured.

Reconfiguring the at least one motion parameter may comprise adjusting said motion parameters. Based on the reconfigured motion parameters a further first motion simulation model can be provided in step 201. In further iterations at least a part of the steps 202, 203, 204, 205, 206 and/or 207 are performed. It can be of advantage to perform step 204 optionally and therefore not to select a further fitness metric. This provides the advantage that one can determine in step 206 if the further first model instance provides an improved fitness value as regards the fitness value as being calculated as a function of the initially first model instance. Therefore, in step 207 the motion parameters can be reconfigured as a function of the fitness value as being calculated in step 206. Hence, it can be automatically detected how to adjust the motion parameters.

Based on the calculated fitness value in step 205 it is possible to determine the improvement of each iteration of reconfiguring at least one motion parameter. It is also possible in step 207 to allow certain rules to adjust the model parameters as a function of the calculated fitness value in step 205.

The aforementioned steps can be performed iteratively and/or in a different order.

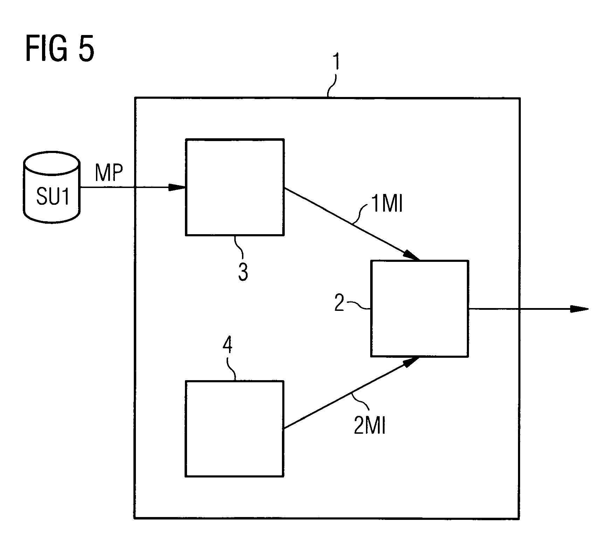

Figure 5 describes an apparatus 1 according to an aspect of the present invention for automatic reconfiguration of at least one motion parameter MP being stored in a storage unit SU as a function of a fitness metric being provided by a fitness metric provision unit 2 the fitness metric indicating a relation between a first model instance 1MI of a motion simulation model, the first model instance 1MI being provided by a model simulation unit 3 and a provided second model instance 2MI, the provided second model instance 2MI being provided by a model provision unit 4, wherein the first model instance 1MI of said motion simulation model is simulated by the model simulation unit 3 as a function of the at least one motion parameter MP.

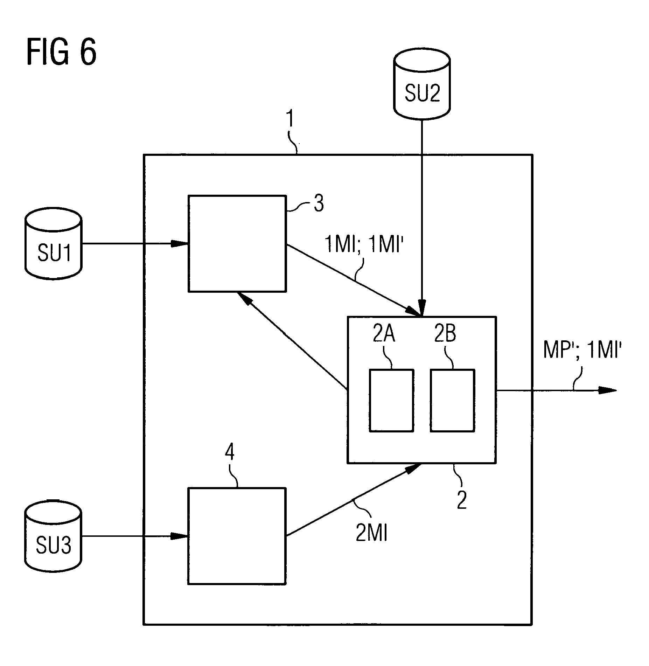

Figure 6 shows a detailed block diagram of an apparatus 1 for automatic reconfiguration of at least one motion parameter MP according to an aspect of the present invention and differs from the apparatus 1 as being shown in figure 5 as follows:

In the present embodiment the fitness metric provision unit 2 is designed to select at least one fitness metric FM from a plurality of fitness metrics FM from a storage unit SU2. After having received the fitness metric from said storage unit SU2, the first model instance 1MI from the model simulation unit 3 and the model instance from the model provision unit 4 the fitness metric provision unit is able to calculate a fitness value. Therefore, the fitness metric provision unit 2 comprises a further fitness value calculation unit 2A. As a function of the calculated fitness value the at least one motion parameter MP is reconfigured. The reconfiguration of the at least one motion parameter MP is in the present embodiment accomplished by a motion parameter reconfiguration unit 2B.

It may be of advantage to transmit the reconfigured at least one motion parameter MP' to the model simulation unit 3. Hence, the model simulation unit 3 is able to create a further first model instance 1MI', which is transmitted to the fitness metric provision unit 2. The fitness metric provision unit 2 is designed to evaluate the further first model instance 1MI' by means of the fitness value calculation unit 2A. Hence, it is possible, to reconfigure the at least one motion parameter MP iteratively, creating in each iteration a further first model instance 1MI'. In case a predetermined fitness value is reached the reconfigured at least one motion parameter MP' is provided by the apparatus 1. It may also be of advantage to provide the calculated first model instance 1MI'.

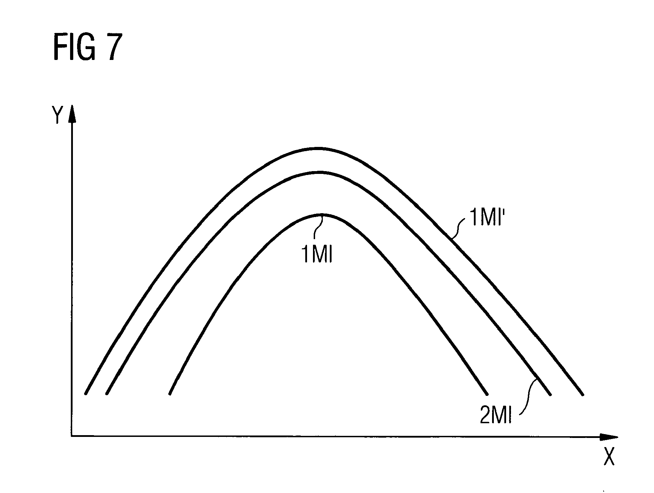

Figure 7 shows a diagram describing several model instances, such as the first model instance 1MI, the second model instance 2MI as well as the calculated further first model instance 1MI'. In the present embodiment the x-axis, denoted by reference sign X represents a density, which is defined as persons/m^2. The y-axis, denoted by reference sign Y, represents a flow of persons, being defined by the number of persons/m * s. In the present embodiment each of the model instances 1MI, 2MI, 1MI' are represented by a curve. In a further simulation run a first model instance 1MI is created. As the simulated model instance 1MI has to match the observed model instance 2MI for obtaining reliable results, the motion parameters MP which served as basis for determining the first model instance 1MI have to be reconfigured.

It is possible that after having reconfigured the motion parameters MP a further first model instance 1MI' is created. As can be seen in the present figure 7 the further first model instance 1MI' is closer to the second model instance than the first model instance. In further iterations the motion parameters MP can be reconfigured and/or refined such that the further created first model instances 1MI' approach the second provided model instance 2MI. Based on a predefined fitness metric it may be possible to determine a quality measurement of how good, which means how reliable the further first model instance 1MI' is as regards the second model instance 2MI. It is therefore of advantage, to automatically reconfigure the at least one motion parameter MP for obtaining simulation results which are able to predict motion behaviour, for instance of pedestrians. Hence, it is possible to not only recalibrate the first model instance 1MI, but also to determine how reliable said calibration is as a function of a provided fitness metric.

The difference of the depicted curves can be measured in a function norm, like the L2-norm or any approximation of this norm. The lesser the distance between characteristics, the better is the fitness of the model. For example, one can approximately measure the difference of fundamental diagrams in the L2-norm as

$$D = \sum_{1 \le i \le n} \left( S_i - F_i \right)^2 / n$$

where $S_i$ is a value for the flow obtained from simulations, and $F_i$ is a value for the flow obtained from observations, both at the same density. From this difference, one obtains the term

$$1 / \sqrt{D}$$

as a measure for the fitness of the model with respect to a fundamental diagram. Hence, a quantitative criterion of precision of simulations is provided. The measure proposed in this embodiment is only one presented solution, while the person skilled in the art appreciates further measures. In general, one can also choose other measures for fitness, as for example, one can add different weight coefficients for different parts of diagrams representing different densities. This may allow calibrating a model more precisely in the regions that are of the most interest.

It is also possible to perform a weighted sum of all differences between observed and modelled characteristics and to calibrate all model parameters MP together so as to minimize this difference.

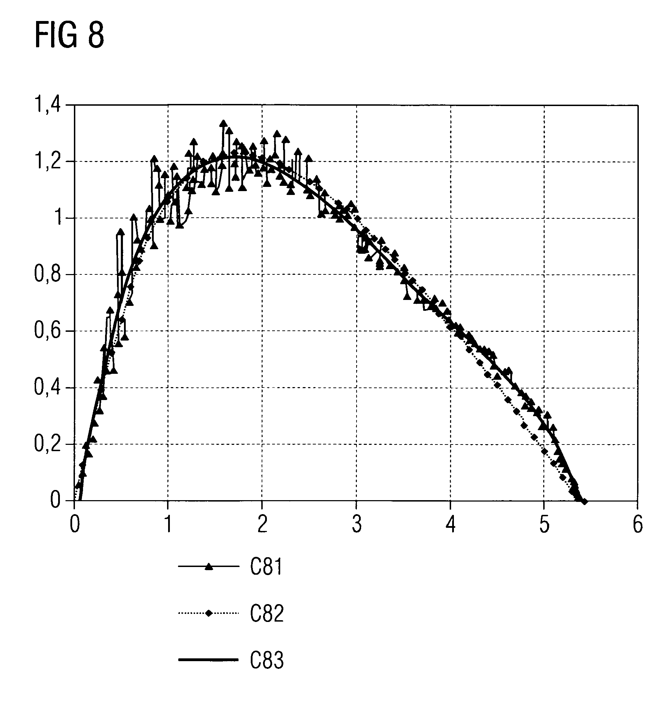

Figure 8 shows a diagram illustrating results of an optimization of motion parameters using a threshold accepting algorithm as being applied by the method for automatically reconfiguring at least one motion parameter according to an aspect of the present invention.

The present figure 8 describes a diagram representing density along the x-axis X1 and flux along the y-axis Y1. Furthermore, a Weidman curve C81, a threshold accepting curve C82 and a polynomial, threshold accepting curve C83 are shown.

Model fitness is an objective function, which is strived to maximize by proper choice of model parameters MP.

This may be performed by choosing deceleration classes for optimizing fitness with respect to fundamental diagrams, although it is possible to treat other characteristics or combinations of them based on other model parameters or combinations of them in the same way.

In the present embodiment 8 deceleration classes are used, which determine an individual speed reduction of a pedestrian depending on the observed person density in its neighbourhood. In this way, individual speeds are retained. With model fitness being defined as the inverse distance between observed and simulated fundamental diagrams, deceleration classes such that optimal fitness is reached have to be chosen. Thus, the optimal choice of model parameters, for instance deceleration classes, amounts to solving a multidimensional discrete optimization problem with boundary conditions, as the range of deceleration parameters is limited.

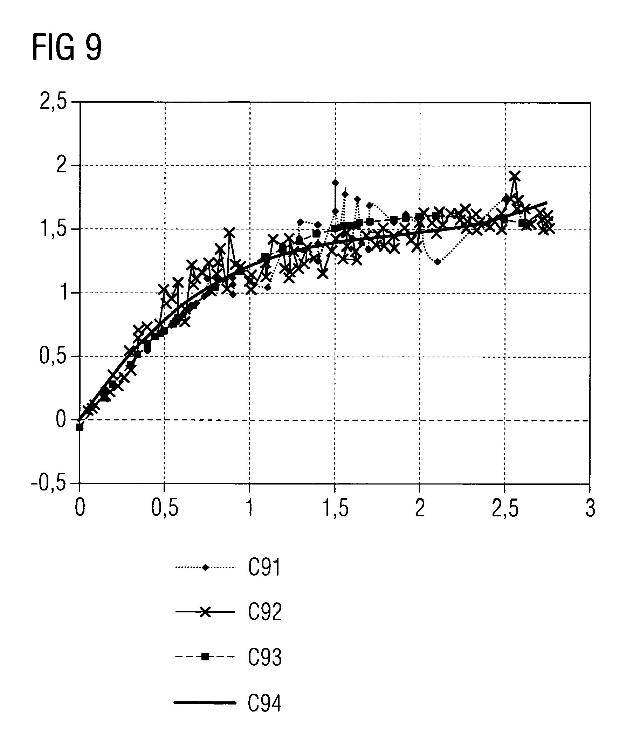

One may apply several optimization methods to the solution of this problem, for instance evolution strategies, extremal optimization, memetic algorithms, reactive search optimization, simulated annealing, tabu search and many further. In the present embodiment as being shown in figure 8 a threshold accepting algorithm has been applied, while in the further figure 9 a genetic algorithm has been applied. Those algorithms, such as the genetic algorithm as well as the threshold accepting algorithm are resource efficient, which allows fast off line calibration speeding up manual adjustment by the factor of fifty.

In the present embodiment the optimization problem is given in form of a positive objective function that one tries to maximize - as it is the case with model fitness as an objective function.

A genetic algorithm maintains a set of candidates that can solve the optimization problem. The set is called a population, its members are called individuals, and the value each individual achieves as an argument of the objective function is called the individual's fitness. The sum of fitness values of all individuals is called the population's total fitness. The goal is to repeatedly create a new population from an existing one - by operations called selection, crossover and mutation - with increased fitness, thereby capturing at one time in the generation process of new populations an individual representing an optimal solution.

Individuals are "coded" as binary strings. In the present embodiment, each deceleration class has a finite interval as its range. A grid is chosen covering this interval, at a prespecified constant resolution level. Every grid point can then be represented as a binary fixed point number - i.e. as a bit string. A specific deceleration class at the chosen resolution level is a specific grid point, i.e. a specific bit string. The number of bits, i.e. the length of the bit string, is determined by the range of the deceleration class and the chosen resolution. All deceleration classes together can be represented as the concatenation of all these bit strings, which is again a bit string. This latter bit string represents one eight dimensional vector of deceleration classes, i.e. point in our space of model parameters. It thus "codes" one individual and therefore is also called the individual's set of chromosomes.

Traditionally, a first population of n individuals is generated randomly according to a uniform distribution covering the entire range of possible solutions. The fitness of all individuals and of the whole population is determined. Next, n individuals are selected from the population at random, with each individual having a selection probability that equals the ratio of its own to the total fitness of the population. An individual can be selected multiple times, such that a population is not a "set" of individuals in the mathematically defined sense of the word. Non selected individuals are no longer considered - they have died out. The goal is to select the fittest, giving others only a reduced chance to survive. A certain percentage of surviving individuals is then selected again, for instance at random, for recombination, which is also known as crossover: a, maybe randomly selected, pair of two individuals break up their chromosomes, bit strings, at the same, which may be randomly chosen, position and exchange the leading part of bits. This produces two new individuals. Finally, the mutation operation is applied to these new individuals, i.e. with a certain probability the individual bits in their representing bit string are flipped.

After the new population is generated by applying selection, crossover and mutation, the process is repeated to get again a new population.

Eight "optimal" deceleration classes are applied in the present embodiment with the following parameters:

1. Population size of n = 20.

2. Crossover probability: 25 %
3. Mutation probability per bit: 1 %

Letting the genetic algorithm run to produce seven generations of populations, a best individual having a fitness of 2.36 is determined.

During the algorithm, one can keep track of the overall best individual obtained. It is of advantage to start with an initial guess of a population that reflects additional knowledge. In the present embodiment eight deceleration classes are chosen corresponding to eight categories of pedestrians' densities. If one numbers these parameters B1, ..., B8 in the order of decreasing densities, it is of advantage to require the following: B1>B2>B3>B4>B5>B6>B7>B8. Hence slow down is larger when densities are higher.

Figure 9 shows a diagram illustrating results of an optimization of motion parameters using a genetic algorithm as being applied by the method for automatically reconfiguring at least one motion parameter according to an aspect of the present invention.

The diagram as depicted in figure 9 holds a x-axis X2, representing density and a y-axis Y2 representing a flux. Three curves are represented, namely describing rush hours C91, calibrated deceleration classes genetic fitness = 1.49 C92, rush hour polynomial C93 and polynomial, calibrated deceleration classes, fitness = 1.49 C94. In the present embodiment the threshold accepting algorithm is applied in order to find deceleration class parameters. Threshold accepting is a heuristic optimization algorithm.

Threshold accepting is a local search, which starts with a random feasible solution and then explores its neighbourhood in the solution space by moving, usually randomly, from its current position, accepting a new solution if and only if it improves the objective function. Threshold accepting overcomes the problem of stopping in local minima by also allowing uphill moves, i.e. Threshold accepting also accepts new solutions which lead to higher objective function values. Change to the worse is accepted with certain probability and if it is not drops to 0, or isSolution is true, or it fails due to a lack of alternative expansion nodes.

The general scheme of threshold accepting algorithm is as follows:

1. Choose threshold value T>0 and threshold factor TF (0<TF<1)
2. Choose a maximum number of steps Zmax and random initial conditions
3. Calculate the fitness for initial condition. Fitness (or quality function in threshold accepting terminology) is calculated in the same way as it has been proposed in genetic algorithm. Quality(C_ref)
4. Choose a neighbour, and calculate the fitness for it.
5. If fitness of this neighbour is better than Fitness (C_ref), than C_ref := C'

6. dFitness := Fitness (C') - Fitness (C) if dFitness> -T

7. C: = C'

8. T: - T*TF

9. Repeat the following steps until time is remaining. Algorithm stops if the temperature drops to 0, or isSolutions is true, or it fails due to a lack of alternative expansion nodes

Threshold accepting can be adapted in the following way. Parameters for deceleration classes, due to the discrete nature of the cellular automaton as being depicted in figure 1, take only discrete values. They can vary in interval from 0 to 1.34, for some reason not relevant for automatic calibration, "no slow down" is not coded as a slow down factor of 1, but of 1.34. In order to obtain exact permitted values one has to divide the whole interval on a number of velocities classes. For example, if all velocities are discretized to n classes then deceleration parameters accept values from an interval [0; 1.34] with a step 1,34/n.

Therefore, one can choose a value which is 1,34/n higher or lower than a previous one.

An implementation can be created as follows:

1. The model is first calibrated on Weidman curve

2. Number of velocities classes is 10, therefore as a neighbour in threshold accepting algorithm one can choose a value which is 0,134 higher or lower than a previous one

3. For implementation of this algorithm the Java Packages may be applied

A successful parameter choice may be:

As a starting threshold T=4,72 has been taken, as a 0,2 part of mean value of fitness after 10 simulation with random initial conditions; TF=0.99

Threshold accepting algorithm allowed to find deceleration parameters that have fitness = 2.66.

Hence, a quantitative measure of model quality is provided. By automatic calibration one can flexibly adjust the model instances, for instance the first model instance 1MI, to several situations. This is in contrast to the application of a highly sophisticated model, which tries to capture all facets of human behaviour, but which would suffer from much longer runtimes. In the present embodiments, as being depicted in figure 8 and figure 9 algorithms, such as the genetic algorithm and the threshold accepting algorithm are used for calibrating pedestrians' velocities for different densities. Hence, model parameters MP of pedestrians are reconfigured. The first model instance 1MI is hence calibrated as a function of a reference curve, named the second model instance 2MI.

**Claims**

1. A method for automatically reconfiguring at least one motion parameter (MP) as a function of a fitness metric (FM), said fitness metric (FM) indicating a relation between a first model instance (1MI) of a motion simulation model and a provided second model instance (2MI), wherein the first model instance (1MI) of said motion simulation model is simulated as a function of the at least one motion parameter (MP).

2. The method according to claim 1, wherein at least one of a group of model instances (1MI; 2MI; 1MI'; MI) describes a motion behaviour of at least one entity, the group comprising: the first model instance (1MI) and the provided second model instance (2MI).

3. The method according to claim 2, wherein the motion behaviour affects at least one entity motion stream.

4. The method according to claims 1 to 3, wherein the provided second model instance (2MI) is calculated as a function of observed motion parameters (MP).

5. The method according to claims 1 to 4, wherein the fitness metric (FM) describes a difference between the first model instance (1MI) and the provided second model instance (2MI).

6. The method according to claims 1 to 5, wherein the fitness metric (FM) is defined as an inverse difference between the first model instance (1MI) and the provided second model instance (2MI).

7. The method according to claims 1 to 6, wherein a fitness value (FV) is calculated as a function of the first model instance (1MI), the provided second model instance (2MI) and the fitness metric (FM).

8. The method according to claim 7, wherein the at least one motion parameter (MP) is automatically reconfigured such that the calculated fitness value (FV) equals or exceeds a predefined fitness value (FV).

9. The method according to claims 1 to 8, wherein the fitness metric (FM) comprises at least one of a group of norms, the group comprising: an L2 norm, an approximation of the L2 norm, a norm assigning different weight coefficients to at least a part of a model instance (1MI; 2MI; 1MI'; MI) and a norm weighting a plurality of differences between the first model instance (1MI) and the provided second model instance (2MI).

10. The method according to claims 1 to 9, wherein the provided second model instance (2MI) comprises at least one density information and at least one flow information of at least one entity motion stream.

**11.** The method according to claims 1 to 10, wherein reconfiguring the at least one motion parameter comprises discrete optimization.

**12.** The method according to claim 11, wherein the discrete optimization comprises performing at least one of a group of optimization procedures, the group comprising: an evolution strategy, an extremal optimization, a memetic algorithm, a reactive search optimization, a simulated annealing and a tabu search.

**13.** The method according to claims 1 to 12, wherein the provided second model instance (2MI) is selected from a plurality of model instances (1MI; 2MI; 1MI', MI).

**14.** The method according to claims 1 to 13, wherein the at least one motion parameter indicates a pedestrian's motion and the motion simulation model indicates a pedestrian stream.

**15.** An apparatus (1) for automatic reconfiguration of at least one motion parameter (MP) being stored in a storage unit (SU1) as a function of a fitness metric (FM) being provided by a fitness metric provision unit (2), the fitness metric (FM) indicating a relation between a first model instance (1MI) of a motion simulation model, the first model instance (1MI) being provided by a model simulation unit (3) and a provided second model instance (2MI), the provided second model instance (2MI) being provided by a model provision unit (4), wherein the first model instance (1MI) of said motion simulation model is simulated by the model simulation unit (3) as a function of the at least one motion parameter (MP).

**16.** A computer program being adapted to perform the method of claims 1 to 14 on a computer.

**17.** A data carrier which stores a computer program according to claim 16.

FIG 1

# FIG 2

$$\begin{pmatrix} \text{par 1} \\ \text{par 2} \\ \text{...} \\ \text{par n} \end{pmatrix} \longrightarrow \boxed{\text{CBPM}} \longrightarrow$$

MI

# FIG 3

- 100
- 101
- 102
- 103

# FIG 4

- 200
- 201
- 202
- 203
- 204
- 205
- 206
- 207

# FIG 5

FIG 6

FIG 7

## FIG 8

## FIG 9

Legend:
- ⋯⋯◆⋯⋯ C91
- ──✕── C92
- ───■─── C93
- ───── C94

Europäisches
Patentamt
European
Patent Office
Office européen
des brevets

# EUROPEAN SEARCH REPORT

Application Number

EP 09 01 1811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Notice from the European Patent Office dated 1 October 2007 concerning business methods" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525 ISSN: 0170-9291 * Statement in accordance with the Notice from the European Patent Office dated 1 October 2007 concerning business methods(OJ 11/2007; p592-593). The claimed-subject matter, with due regard to the description and drawings, relates to processes comprised in the list of subject-matter and activities excluded from patentability under Art.52 (2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | | INV. G06Q10/00 |

TECHNICAL FIELDS SEARCHED (IPC)

G06Q

The present search report has been drawn up for all claims

| Place of search | Date of completion of the search | Examiner |
|---|---|---|
| The Hague | 29 January 2010 | Moser, Raimund |

EPO FORM 1503 03.82 (P04C01)